# FASCICULE DE BREVET EUROPEEN

(11) **EP 3 152 817 B1**
(45) Date de publication et mention de la délivrance du brevet: **27.01.2021**
(21) Numéro de dépôt: 15733808.8
(22) Date de dépôt: 05.06.2015
(51) Int. Cl.: H02K 5/10, H02K 5/22, H02K 9/19, H02K 7/14, H02K 1/18, H02K 5/20, B60L 3/00, B60K 7/00, H02K 7/08, B60K 11/02, B60K 1/00

(54) **ENSEMBLE STATOR POUR MOTEUR-ROUE ET SON SUPPORT-FUSÉE**
STATORANORDNUNG FÜR EINEN RADMOTOR UND ACHSSCHENKELTRÄGER DAFÜR
STATOR ASSEMBLY FOR WHEEL MOTOR AND STUB AXLE SUPPORT THEREFOR

(30) Priorité: 05.06.2014 FR 1455105
(43) Date de publication de la demande: 12.04.2017
(73) Titulaire: Valeo Systèmes de Contrôle Moteur, 95800 Cergy Saint Christophe (FR)
(72) Inventeur: MICHEL, Luc, F-78740 Evecquemont (FR)
(86) Numéro de dépôt international: PCT/FR2015/051495
(87) Numéro de publication internationale: WO 2015/185874

(56) Documents cités:
- EP-A1- 0 337 032
- EP-A1- 1 109 298
- WO-A1-94/01917
- WO-A1-03/050498
- WO-A1-2007/043685
- WO-A1-2008/144517
- WO-A1-2010/101914
- WO-A1-2012/121629
- CN-A- 102 673 380
- CN-U- 201 490 802
- DE-A1-102005 055 597
- FR-A1- 2 988 066

## Description

L'invention concerne généralement des dispositifs de traction-freinage intégrés aux roues dans un véhicule à propulsion électrique, ce qui est communément appelé 'moteur-roue'. Plus particulièrement, l'invention est relative à un ensemble stator pour moteur-roue et son support-fusée associé, destiné à équiper un dispositif de traction-freinage particulièrement compact, logé dans une roue de véhicule.

On note ici qu'il peut s'agir d'une roue directrice ou non directrice du véhicule, et pouvant être par ailleurs reliée au véhicule au moyen d'un système de suspension, ou de manière rigide.

Un moteur-roue selon la présente invention peut équiper par exemple un véhicule de livraison non polluant, un véhicule utilitaire 100% électrique, tout type de quadricycle, tricycle 100% électrique, 2-roues électrique. L'invention peut également être utilisée dans le cadre d'un véhicule hybride, un des essieux pouvant être motorisé en mode électrique.

Il est connu, par exemple du document US2013099554, d'agencer un dispositif de traction-freinage logé au moins en partie dans l'espace intérieur d'une jante de roue. Toutefois, on remarque que la taille maximale possible du disque est limitée par le passage des câbles électriques au-dessus du disque.

Il est également connu, par exemple du document WO01/54939, une roue motorisée dans laquelle il est prévu un dispositif de refroidissement liquide ; toutefois, l'arbre central est une pièce tournante, ceci implique de disposer les canalisations de fluide à une position éloignée de l'axe. On remarque aussi que le dispositif de freinage doit être prévu en plus du côté intérieur du véhicule.

Il est également connu, par exemple du document EP1109298, une roue motorisée dans laquelle il est prévu un dispositif de refroidissement liquide. Mais dans ce cas aussi, l'arbre central est une pièce tournante, ceci implique de disposer les canalisations de fluide à une position éloignée de l'axe. On remarque aussi que le dispositif de freinage dépasse aussi beaucoup vers le côté intérieur du véhicule.

Par conséquent, il reste un besoin de proposer une roue motorisée avec un dispositif de traction-freinage, le freinage comprenant un système de frein à disque conventionnel, le dispositif étant logé en majeure partie à l'intérieur du volume d'une jante d'une roue de taille conventionnelle.

Selon un premier aspect, il est divulgué un support-fusée pour un ensemble stator destiné à un dispositif de traction-freinage pour une roue motorisée de véhicule électrique,
le support-fusée comportant une embase de fixation destinée à relier le dispositif de traction-freinage au véhicule, le support-fusée étant destiné à supporter fixement l'ensemble stator et à supporter rotationnellement le rotor et la roue motorisée,
le support-fusée comportant au moins trois passages axiaux, pour deux canalisations de fluide et un pour passage de câbles, ces trois passages débouchant dans une zone centrale de l'embase de fixation,

Grâce à ces dispositions, l'ensemble stator peut être relié au reste du véhicule pour les fonctions de commande électrique et de refroidissement liquide, sans risque d'interférence avec les parties tournantes, et sans générer des contraintes sur le dimensionnement des parties tournantes. Une telle solution pour le support-fusée autorise une construction géométrique et architecturale favorable à une intégration performante dans le volume d'une jante de roue.

Avantageusement, les trois passages sont distincts, de manière à bien séparer les deux canalisations liquides et le passage des câbles.

Avantageusement, le support-fusée comporte une première portée pour un premier roulement, une portée intermédiaire pour recevoir un corps de stator, une seconde portée pour un second roulement, les diamètres allants décroissants depuis l'embase de fixation jusqu'à l'extrémité libre à l'opposé de l'embase de fixation. Moyennant quoi le montage depuis l'extrémité est facilité, et cette forme est optimisée pour la résistance aux efforts de flexion

Avantageusement, le passage de câbles débouche radialement dans un espace adjacent au corps du stator. De sorte que les câbles peuvent être raccordés aux bobinages du stator.

Avantageusement, le passage de câbles peut déboucher axialement à l'extrémité opposée de l'embase. De sorte qu'il est possible d'installer et d'alimenter un capteur de position de type sinus cosinus en bout de support-fusée.

Les deux passages axiaux pour deux canalisations sont formés par des perçages parallèles à l'axe principal A du support-fusée.

Lesdits perçages peuvent être traversants ; ce qui est une opération d'usinage facile et bon marché ;

Lesdits perçages peuvent être non-traversants, chaque fond de perçage débouchant dans un canal borgne dirigé radialement vers l'extérieur et de préférence obtenu de fonderie.

Selon un deuxième aspect, il est divulgué un ensemble stator comportant un support-fusée tel que décrit précédemment, un corps de stator, et un couvercle délimitant une chambre de refroidissement ;
moyennant quoi, grâce aux passages axiaux dans le support-fusée on propose un refroidissement par fluide liquide du stator compatible avec le passage des câbles conducteurs qui commandent les bobines du stator.

Le stator comprend un équipement annulaire de bobinages, de préférence agencé de manière à être à une position axiale moyenne plus éloignée de l'embase du support-fusée que la position axiale moyenne du palier portant sur le support-fusée. Autrement dit, la partie électromagnétique du stator est décalée vers l'extérieur par rapport à l'embase, ce qui permet de pouvoir loger le système de freinage, notamment le disque de frein et l'étrier correspondant, et de les fixer au voisinage du flasque de fixation du support-fusée.

Le couvercle délimitant la chambre de refroidissement est agencée du côté extérieur du corps du stator, c'est-à-dire du côté de l'extrémité libre 13 du support-fusée ; moyennant quoi, on peut optimiser les performances de refroidissement de l'équipement statorique ; et les connexions aux bobines étant situées du côté intérieur, la longueur de parcours des câbles de commande électrique peut être minimisée.

Le couvercle délimitant la chambre de refroidissement est agencée du côté intérieur du corps du stator, c'est-à-dire axialement disposé entre le corps du stator et l'embase de fixation. De sorte que le couvercle peut être plus simple à fabriquer, et les connexions aux bobines étant situées du côté extérieur, le parcours des câbles peut présenter des courbures peu prononcées, ce qui facilite l'introduction des câbles et les opérations de raccordement.

Selon un troisième aspect, l'invention a pour objet un dispositif de traction-freinage comportant un ensemble stator tel que décrit précédemment, un rotor, un disque de frein solidaire en rotation du rotor, le disque de frein étant disposé plus proche de la fixation au véhicule que le stator et le rotor, le disque de frein étant séparé du rotor par un espace G disponible pour loger au moins étrier de frein, moyennant quoi on peut proposer une roue motorisée et freinée dans un volume très compact, en utilisant un étrier de frein standard et ainsi minimiser le coût.

Avantageusement, le dispositif de traction-freinage est circonscrit dans le volume intérieur d'une jante de roue de 14 pouces. Moyennant quoi, le dispositif de traction-freinage peut être utilisé pour une grande variété de véhicules, utilitaires, quadricycles, tricycles, etc., tout en ayant une puissance électrique jusqu'à 10 ou 15 kW ;

Le rotor est formé comme un assemblage d'une partie centrale cylindrique portant les aimants permanents, un disque extérieur sur la sur lequel peut être fixée la jante de roue et un disque intérieur à col sur laquelle est fixé le disque de frein ; ceci constitue un assemblage simple permettant au rotor d'envelopper le stator et d'être relié directement au disque de frein agencé du côté intérieur par rapport au stator, en laissant un espace annulaire nécessaire pour le placement de l'étrier, cela permet en outre d'assurer une liaison simple et directe avec la jante.

L'espace intérieur délimité par le rotor est isolé de l'environnement extérieur par des joints d'étanchéité; ce qui permet d'éviter une éventuelle pollution par les particules de freinage à l'intérieur du dispositif de traction-freinage.

Selon un quatrième aspect, il est également divulgué un joint fendu formant presse étoupe pour rendre étanche le passage des câbles électriques et des canalisations de refroidissement ('conducteurs') à l'endroit de l'embase du support-fusée. Plus précisément, il est proposé un joint souple (par exemple en matériau élastomère), en forme générale de cylindre de faible hauteur avec un bord périphérique, le joint comprenant des orifices de passage traversants et cylindriques de même axe que l'axe général du joint, chacun pour un conducteur (câble électrique et/ou canalisation de fluide), avec pour chaque orifice une fente radiale reliant l'orifice de passage au bord périphérique, le joint étant reçu dans une pièce formant cuvette de réception de hauteur inférieure à la hauteur du joint, la cuvette comprenant une bordure de maintien apte à coopérer avec le bord périphérique du joint, la cuvette de réception ayant un fond évidé en regard des orifices du joint, et une pièce de fermeture destinée à être assemblée sur la pièce formant cuvette et à exercer une pression déformant le joint pour serrer les conducteurs et/ou pour réduire la section des orifices, pour presser sur le bord et le fond de la cuvette et refermer les fentes radiales, de manière à assurer un passage étanchéifié.

En vertu de ces dispositions, on obtient un joint formant presse étoupe qui autorise le dégagement radial des conducteurs en cas d'opérations de maintenance ; de plus, la mise en pression du joint est assurée automatiquement par l'assemblage de pièce de la pièce de fermeture, sans collier spécifique ou autre dispositif de mise en pression spécifique.

Optionnellement, le joint peut présenter une première face globalement plane et perpendiculaire à l'axe général du joint, une seconde face sensiblement plane et parallèle à la première face ; ainsi l'interface avec la cuvette et la pièce de fermeture est particulièrement simple.

Optionnellement, le joint présente une forme générale de galette, avec un bord périphérique de révolution ; ainsi le joint est une pièce particulièrement simple à fabriquer.

On décrit maintenant brièvement les figures des dessins.
La figure 1 est une vue générale schématique, vue de dessus, d'une plate-forme véhicule intégrant une roue motorisée conforme à la présente invention.
La figure 2 est une vue éclatée en perspective du dispositif de traction-freinage intégré dans la roue motorisée.
La figure 3 est une vue de face du dispositif de traction-freinage,
La figure 4 montre une coupe axiale du dispositif de traction-freinage.
La figure 5 est vue en perspective d'une coupe axiale du dispositif de traction-freinage, avec la jante de roue.
La figure 6 montre une vue partiellement coupée de l'ensemble stator, selon la ligne de coupe VI-VI visible sur la figure 7.
La figure 7 illustre la chambre de refroidissement liquide.
Les figures 8A, 8B et 8C montrent le support-fusée de manière plus détaillée.
La figure 9 illustre les fonctions de roulement et d'étanchéité.
La figure 10 illustre le joint fendu d'étanchéité des câbles.

Ci-après un exposé détaillé de plusieurs modes de réalisation de l'invention assorti d'exemples et de référence aux dessins.

Dans l'exemple illustré, un véhicule **200** comporte quatre roues **100,** chacune étant formée comme un moteur-roue équipé d'un dispositif de traction-freinage. Bien sûr, dans d'autres configurations, on peut utiliser seulement deux roues motorisées, les autres étant suiveuses. Indépendamment de la motorisation, deux ou quatre de ces roues peuvent être directrices.

De plus, les roues peuvent être reliées au véhicule par un système de suspension. Comme déjà indiqué, la roue motorisée qui va être décrite peut aussi être utilisée dans un véhicule à plus de quatre roues, un tricycle, un 2-roues.

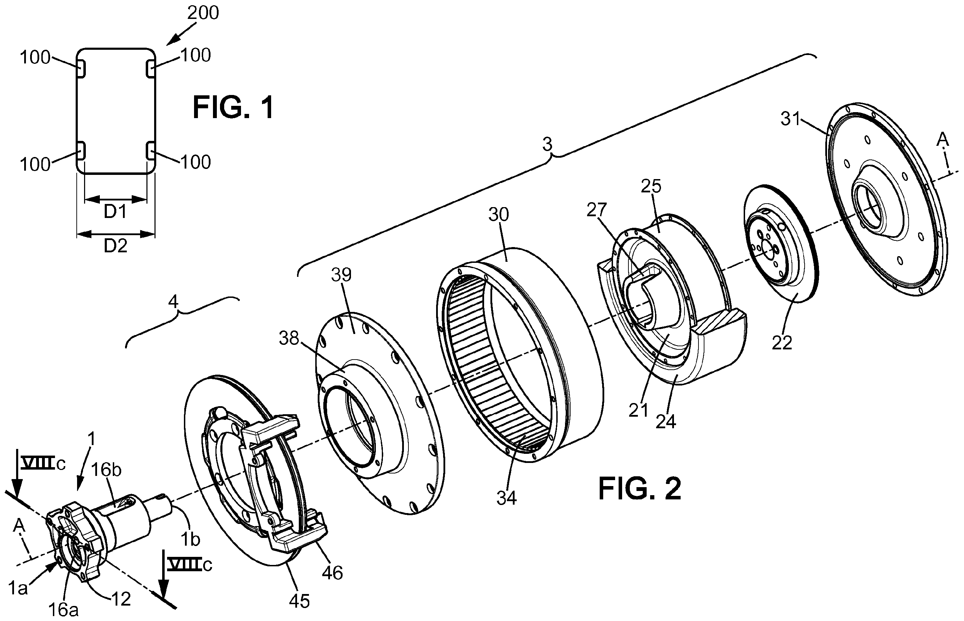

En référence à la Figure 1, la largeur hors-tout extérieure est repérée **D2** et la largeur entre roues (motorisées) est repérée **D1.**

Il s'agit de maximiser le rapport **D1/D2,** c'est-à-dire fournir un espace intérieur disponible le plus important pour une largeur extérieure contrainte. Pour un véhicule de livraison, le volume de chargement et la largeur **D1** entre passages de roue sont des critères déterminants.

On note que, comme on loge la motorisation dans les roues, il n'y pas d'organe de motorisation ailleurs dans le véhicule, et hormis les batteries, la cabine de conduite et quelques accessoires, tout l'espace restant de la caisse est rendu disponible pour le chargement, ce qui est avantageux.

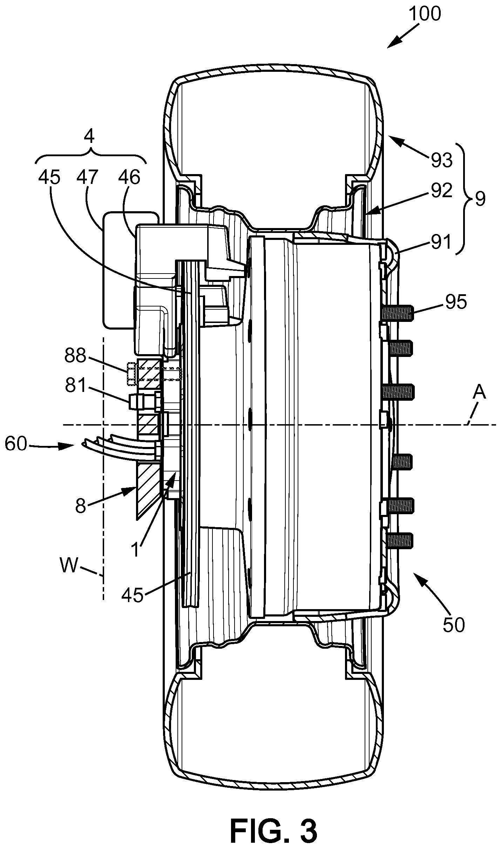

En référence à la Figure 3, la roue motorisée **100** comprend une roue **9** proprement dite comprenant un pneu **93** monté sur une jante standard **92** de façon classique et un voile de jante **91** formant la partie centrale de la jante, avec des trous de fixation pour recevoir des boulons **95** faisant saillie du dispositif de traction-freinage **50.**

### Dispositif de traction-freinage

En référence à la Figure 2, le dispositif de traction-freinage **50** comprend un support-fusée **1** relié au véhicule, un corps de stator **21,** un couvercle **22** de stator, un ensemble rotor **3** monté à rotation sur le support-fusée autour du stator, l'axe de rotation, aussi appelé axe de roue, étant repéré **A.**

Il s'agit d'une configuration à rotor externe, le rotor **3** étant situé radialement à l'extérieur du stator. Un système de frein à disque **4** complète la configuration du dispositif de traction-freinage **50.**

Le support-fusée **1** comprend une embase de fixation **12,** situé à une première extrémité axiale **1a,** et s'étend avec une section globalement décroissante vers une seconde extrémité axiale **1b**. Le support-fusée **1** est une pièce métallique robuste et relativement massive, qui doit supporter une partie du poids du véhicule tant en statique qu'en dynamique. Le support-fusée **1** est de préférence monobloc comme illustré, mais il n'est pas exclu qu'il soit fait en 2 parties assemblées.

Par convention, dans la suite de document, et en l'absence du qualificatif « radial » ou « radialement », on désignera par « extérieur » ou « coté extérieur » les éléments situés plus près de l'extrémité libre **1b** du support-fusée, et on désignera par « intérieur» ou « coté intérieur» les éléments situés plus près de l'embase de fixation **12**,**1a** du support-fusée. « Vers l'intérieur » désigne une orientation axiale définie en s'éloignant de l'extrémité libre **1b** du support-fusée en direction de l'embase de fixation **1a.** « Vers l'extérieur » désigne une orientation axiale définie en s'éloignant de l'embase de fixation **12,1a** en direction de l'extrémité libre **1b** du support-fusée. Comme illustré aux figures 2 à 6, l'embase de fixation **12** comprend cinq trous taraudés **85** destinés à la fixation de la roue motorisée sur une pièce appelée porte fusée **8** ou jambe de force 8, cette dernière étant reliée à la caisse du véhicule, le cas échéant au travers d'une suspension à barre de torsion ou ressort (hors périmètre représenté).

Des boulons **88** permettent de solidariser le porte fusée **8** et l'embase de fixation **12** du support-fusée **1** (Fig. 3). On note qu'il s'agit bien d'un montage en porte-à-faux, l'extrémité libre opposée **1b** n'est pas supportée par rapport à la caisse du véhicule.

### Frein et Rotor

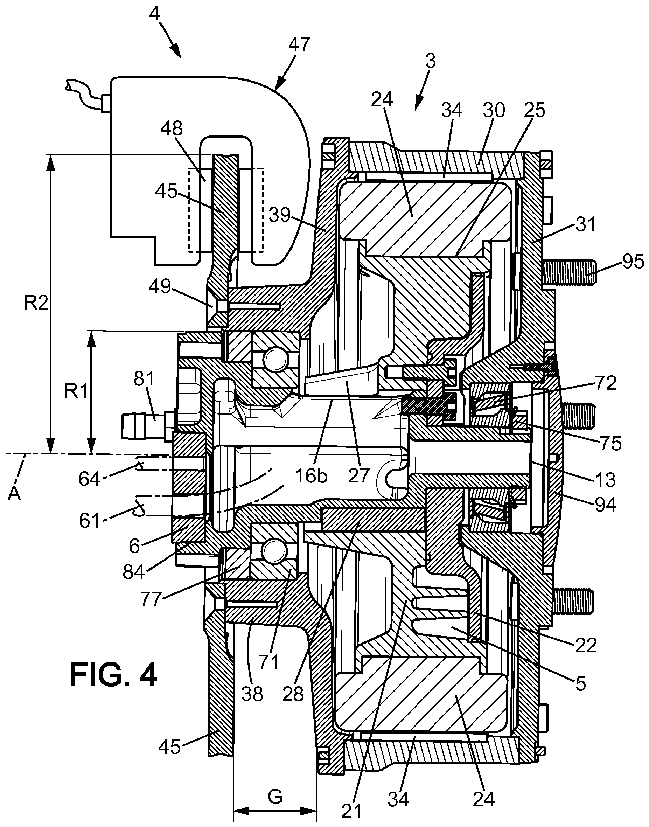

Un disque de frein **45** est monté solidaire en rotation du rotor 3, le disque de frein est disposé plus proche de la fixation au véhicule que le stator 2 et le rotor 3, c'est-à-dire du côté intérieur, le disque de frein **45** étant séparé du rotor **3** par un espace **G** (Fig. 4) disponible pour loger un étrier de frein **47** standard.

L'étrier de frein **47** est monté sur une chape support **46** solidaire de la jambe de force 8. Des plaquettes de freins **48** standard sont destinées à être pressées contre le disque 45 en cas de freinage, et à n'exercer qu'un effort négligeable en cas d'absence de pression hydraulique. Ce genre de système de frein à disque avec étrier et plaquette est choisi parmi les pièces standard du marché, il est connu en soi et ne sera pas détaillé plus ici. Le disque 45 est boulonné sur le rotor par des vis à tête fraisée **49** de manière connue.

On remarque que le diamètre repéré **R1** dans lequel est circonscrit l'embase de fixation du support-fusée **1** est inférieur au diamètre radial intérieur du disque 45. Par ailleurs, **R2** est le diamètre radial extérieur du disque.

Dans la configuration de l'invention, on maximise le rapport R1/R2, pour loger une embase **12** suffisamment robuste au centre de l'évidement central du disque de frein 45, tout en utilisant un système de frein à disque **4** avec étrier standard du marché. Dans l'exemple illustré, le rotor **3** est formé comme un assemblage d'une partie centrale cylindrique **30** portant des aimants permanents **34** (alternance Nord-Sud), un disque extérieur **31** sur lequel peut être fixée la jante de roue **91,92** et un disque intérieur **39** à col **38** sur lequel est fixé le disque de frein 45.

### Stator

Côté stator, l'ensemble stator **2** comprend le support-fusée **1** déjà mentionné, un corps de stator **21,** solidairement fixé au support-fusée 1 et un couvercle **22,** fixé au corps du stator 21 et délimitant avec le corps du stator une chambre de refroidissement **5** qui sera décrite en détail plus loin. Le corps du stator **21** comporte un palier cylindrique interne **20** centré sur l'axe **A,** destiné à être monté sans jeu substantiel sur une portée **18** du support-fusée 1. Le corps du stator **21** reçoit, dans une gorge annulaire **25** large délimitée par une bordure intérieure **25a** et une bordure extérieure **25b,** un équipement annulaire de bobinages **24** statoriques. L'équipement annulaire statorique peut typiquement comprendre une succession de bobinages, dans le sens circonférentiel, qui forme des pôles électromagnétiques. Par exemple, il peut s'agir d'un moteur triphasé synchrone avec une succession de pôles U,V,W comme connu en soi.

La pluralité de bobinages sont commandés par un calculateur (non représenté) destiné à contrôler le couple généré par le moteur électrique formé par l'ensemble stator + rotor. Le calculateur de contrôle étant logé hors de la roue, cela rend nécessaire une liaison électrique entre la roue elle-même et le reste du véhicule.

Le moteur électrique du dispositif de traction-freinage **50** est sollicité pour fournir un couple de traction, et il est également utilisé pour la fonction freinage récupératif. La puissance électrique est de plusieurs kilowatts et par conséquent un refroidissement efficace est nécessaire dans certaines conditions d'utilisation défavorables. En conditions urbaines, type 'stop-and-go', on sollicite à la fois le moteur en moteur et génératrice, et aussi le système de freinage **4,** et il s'avère qu'un refroidissement par air n'est pas suffisant. La solution retenue est par conséquent un refroidissement liquide, dans lequel des calories sont évacuées à distance du dispositif de traction-freinage lui-même. Il s'agit donc de refroidir le stator, en particulier l'équipement de bobinage dans lequel se produit une dissipation thermique au moyen d'une circulation de liquide qui comprend une première canalisation qui amène le liquide frais depuis le véhicule et une deuxième canalisation par laquelle le liquide de refroidissement repart vers le véhicule.

Par conséquent, trois liaisons doivent être établies entre l'équipement statorique et le véhicule, et selon l'invention, ces trois liaisons sont établies au travers de l'intérieur du support-fusée, deux liaisons hydrauliques et une liaison électrique, cette dernière pouvant comporter plusieurs conducteurs électriques unitaires.

Ainsi, le support-fusée comporte trois passages axiaux, deux pour des canalisations hydrauliques **14,15** de fluide, une 'aller' 14 et une autre 'retour' 15, et un troisième passage **16** pour le passage de câbles électriques **60.**

Au niveau de l'embase de fixation **12** à la jambe de force **8,** ces trois passages débouchent dans une zone centrale **11** de l'embase de fixation **12,** donc à bonne distance des parties tournantes (disque, jante). Les trois passages axiaux sont avantageusement répartis au voisinage de l'axe **A** selon une disposition générale en triangle, le troisième passage **16** ayant des dimensions supérieures aux deux premiers **14,15.**

Dans le cas où la roue en question est d'une roue directrice, avantageusement selon la présente invention, il est possible de positionner l'axe de pivotement **W** de direction de la roue à proximité immédiate du plan d'interface **P** de l'embase **12,** dans l'optique d'optimiser le rapport **D1/D2** comme déjà évoqué. De plus, on positionne de préférence l'axe de pivotement **W** à faible distance de l'axe de roue **A** (voire même ils s'intersectent), de sorte que lors des mouvements de rotation de la direction (autour de **W**), il n'y a pas de traction sur les câbles électriques et hydrauliques, mais un simple effet de charnière.

Bien sûr, on note qu'il pourrait y avoir plus de trois passages.

Concernant le passage pour les câbles, il s'étend depuis l'embouchure **16a** côté fixation véhicule vers l'extrémité libre, il débouche par une sortie **16b** débouchant radialement vers l'extérieur au voisinage du corps du stator **21,** de sorte que les câbles de commande puissent aller raccorder les différents bobinages de l'équipement bobiné **24.** Dans l'exemple représenté, la sortie **16b** débouche du côté intérieur par rapport au corps du stator 21 et donc les bobinages sont raccordés par les câbles du côté intérieur de l'équipement annulaire de bobinages **24.**

En outre, optionnellement, il peut aussi déboucher à l'extrémité axiale **1b** du support-fusée par une ouverture d'extrémité **13.**

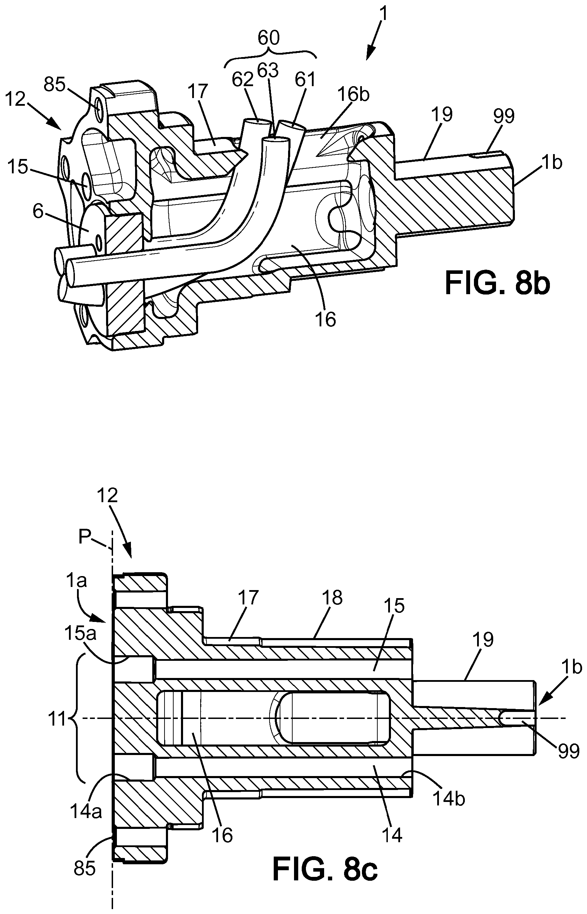

Le passage **16** est obtenu de préférence de fonderie et le débouché radial **16b** présente des bords inclinés, par exemple sensible à 45°, pour faciliter le passage des câbles (Fig 8b).

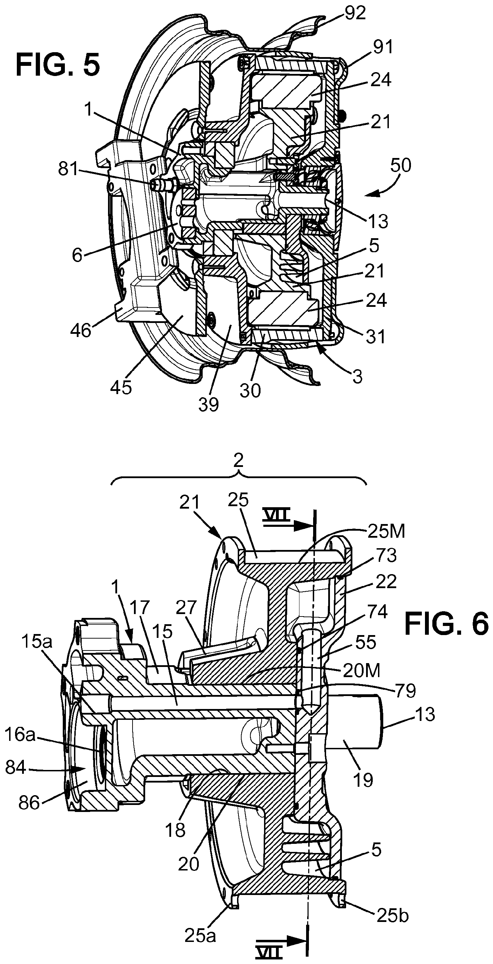

L'équipement annulaire de bobinages **24** est généralement **décalé vers l'extérieur** par rapport au support-fusée **1.** Autrement dit, l'équipement annulaire de bobinages **24** est agencé de manière à être à une position axiale moyenne **25M** plus éloignée du support-fusée **1** que la position axiale moyenne **20M** du palier **20** portant sur le support-fusée (Fig 6), afin de pouvoir loger le disque de frein et l'étrier correspondant au voisinage du flasque de fixation (Fig 4).

Compte tenu de ce décalage, on prévoit dans le palier **20** interne un évidement **27** qui se retrouve en vis-à-vis et en prolongement du débouché **16b** du passage des câbles (Fig 2 et 4).

### Circuit de refroidissement

La canalisation aller **14** du support-fusée est raccordée coté véhicule moyennant un raccord fluide **81** vissé dans l'embouchure taraudée **14a** du passage 14.

Dans ce premier mode de réalisation l'alésage **14** est traversant et débouche dans un trou borgne **56** réalisé dans le couvercle **22** de stator, et qui débouche dans une portion d'entrée **52** de la chambre de refroidissement. Plusieurs canaux relient la portion d'entrée à une portion de sortie **51** dans laquelle débouche un autre trou borgne **55** réalisé dans le couvercle, parallèle au premier mais décalé dans un plan transversal, lequel rejoint la seconde canalisation de retour **15.**

Une cloison de séparation **59** sépare hermétiquement la portion d'entrée **52** de la portion de sortie **51.**

Les canaux d'échanges thermiques **53,54** en arc de cercle sont disposés concentriquement ; ils sont disposés hydrauliquement en parallèle dans l'exemple présenté ; ils pourraient aussi bien être disposés hydrauliquement en série à la façon d'un labyrinthe.

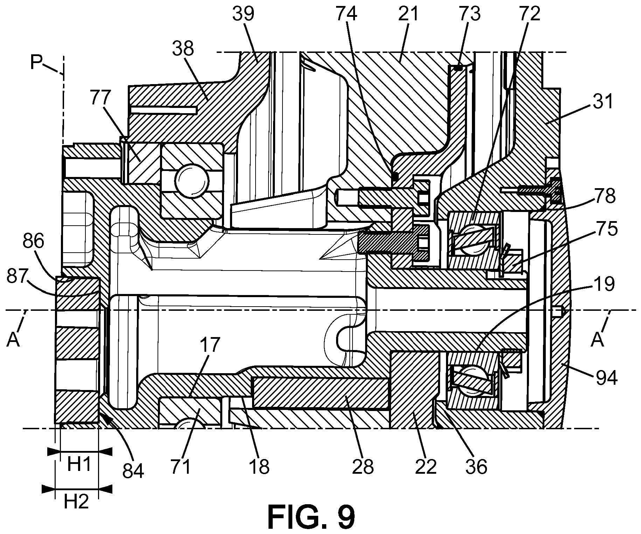

Il est prévu des joints d'étanchéité **73,74** (Fig 9) qui permettent d'éviter une fuite de liquide depuis la chambre de refroidissement **5** vers l'équipement électrique du stator. À l'interface entre chacun des canaux hydrauliques **14,15** et le couvercle, on trouve également un joint torique d'étanchéité **79.**

### Assemblage

Le support-fusée **1** comporte une première portée cylindrique **17** pour recevoir un premier roulement **71,** une portée intermédiaire **18** pour recevoir le palier **20** du corps de stator **21,** avec verrouillage en rotation par une clavette **28,** une seconde portée cylindrique **19** pour un second roulement **72,** les diamètres allants décroissants depuis le l'embase de fixation jusqu'à l'extrémité **1b**. En effet, pour faciliter le montage, on monte sur le support-fusée les éléments suivants :
- tout d'abord un joint de protection **77** à frottement réduit,
- puis le premier roulement **71** (il s'agit ici de roulement à billes standard haute résistance),
- puis on monte le disque intérieur **39** du rotor, le col **38** du disque intérieur 39 du rotor étant monté sur le premier roulement **71,**
- puis on monte la clavette 28 et le corps du stator **21** équipé de l'équipement annulaire des bobinages **24** et le couvercle **22** comprenant les joints d'étanchéité,
- puis la partie centrale cylindrique **30** avec les aimants permanents, partie centrale que l'on fixe au disque intérieur **39,**
- puis le disque extérieur **31** du rotor, que l'on fixe à la partie centrale 30 du rotor,
- puis le second roulement **72,** ici un roulement à billes à contact oblique, pour supporter de serrage axial, et les efforts transverses supportés par la roue (c'est-à-dire le long de l'axe A),
- puis l'écrou de serrage **75** à rondelle d'arrêt, et enfin le capuchon **94** avec un joint torique **78.**

Le second roulement **72** immobilise axialement le disque extérieur 31 du rotor grâce à un rebord intérieur **36** ménagé dans le moyeu central du disque externe.

On note que le premier roulement **71** et/ou le second roulement **72** pourraient être selon une alternative des roulements à rouleaux coniques.

Une rainure **99** ménagée en extrémité du second palier cylindrique **19** permet de recevoir un linguet de la rondelle d'arrêt de l'écrou de serrage **75.**

### Joint fendu

Le système de freinage **4** génère des particules arrachées du matériau de friction des plaquettes **48,** ces particules sont polluantes et peuvent s'accumuler à des endroits indésirables. Afin d'éviter que des particules puissent entrer à l'intérieur du dispositif de traction-freinage **50,** le volume intérieur délimité par le rotor **3** est avantageusement isolé de l'environnement extérieur, notamment vis-à-vis du système de freinage **4.**

Tout d'abord on dispose un joint frottant **77** déjà mentionné, adjacent au premier roulement **71.** On peut utiliser un joint à lèvre, voire à double lèvre, mais on s'attache à retenir un joint à frottement réduit.

Par ailleurs, on dispose un joint **6** formant presse étoupe pour rendre étanche le passage des câbles électriques **61, 62, 63,** au niveau de l'embase de fixation **12.** Plus précisément, on choisit un joint **6** en matériau élastomère, par exemple en silicone, en forme générale de cylindre de faible hauteur **H2** (forme de 'galette') avec un bord périphérique extérieur **67.**

Le joint comprend des orifices de passage cylindriques **65,** avec un même axe que l'axe général du joint (parallèle à A), un orifice de passage pour chacun des câbles électrique **61,62,63.** On remarque que dans ledits orifices traversants on pourrait aussi faire passer des canalisations de fluide, par conséquent on peut utiliser le terme générique de 'conducteur' pour désigner des câbles électriques, des canalisations hydrauliques.

Pour chaque orifice **65,** une fente radiale **66** relie l'orifice de passage au bord périphérique **67,** pour autoriser le montage du conducteur (câble ou conduite) depuis le bord extérieur jusque dans l'orifice de passage.

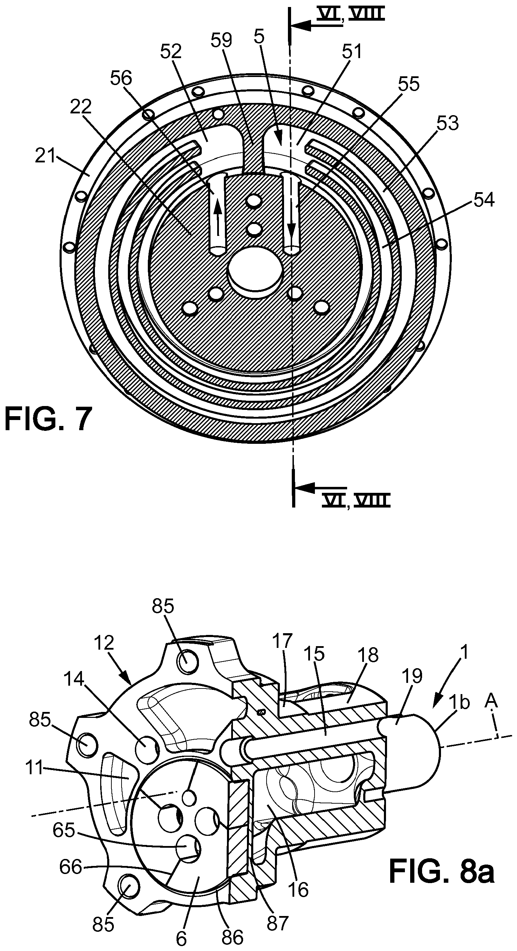

Le joint **6** est reçu dans une forme de cuvette **84** de réception de hauteur **H1** inférieure à la hauteur du joint, de sorte que au repos, le joint **6** dépasse du plan d'interface **P** de l'embase de fixation (cf. Fig 8A, 8B et 9).

Le fond **87** de la cuvette de réception est évidé en regard des orifices **65** du joint, pour laisser le passage des conducteurs au-delà du fond de la cuvette.

Lorsque l'on vient fixer le support-fusée **1** sur la jambe de force **8,** les surfaces de la jambe de force **8** au voisinage du joint compressent le joint **6** selon la direction axiale **A.**

Il en résulte une compression destinée à exercer une pression déformant le joint.

Cette compression a pour effet d'une part de serrer les conducteurs 60 ou même au préalable réduire la section des orifices **65,** et d'autre part presser le bord extérieur **67** sur le fond et/ou la bordure **86** de la cuvette. En outre, cette compression a aussi pour effet de refermer hermétiquement les fentes radicales **66,** de manière à assurer un passage étanchéifié, de type presse étoupe.

Mais de façon avantageuse, cette solution permet de démonter l'assemblage et de le remonter pour des motifs de maintenance.

Dans l'exemple illustré, comme le joint **6** présente une souplesse importante, il n'est pas nécessaire de prévoir un jeu de montage à l'état repos (non compressé) ; mais la compression mentionnée ci-dessus permettrait également de rattraper un jeu minime qui serait nécessaire au montage du joint lui-même dans la cuvette et/ou des conducteurs dans les orifices. Autrement dit, le joint **6** au repos peut présenter un diamètre extérieur légèrement soit inférieur, soit identique, ou soit légèrement supérieur au diamètre de la bordure intérieure **86** de la cuvette.

Dans l'exemple illustré, le dépassement au repos est de l'ordre de 2 mm pour une épaisseur de joint (hauteur du cylindre **H2**) de 16 mm, et une profondeur de cuvette **H1** de 14 mm.

Dans l'exemple représenté aux figures 4-10, le joint fendu **6** comporte trois orifices **65** de diamètre important pour les câbles de puissance **61, 62, 63** des trois phases du moteur électrique et un orifice **68** de plus petite taille pour un câble multiconducteur **64** permettant de relier un ou plusieurs capteurs au calculateur de commande.

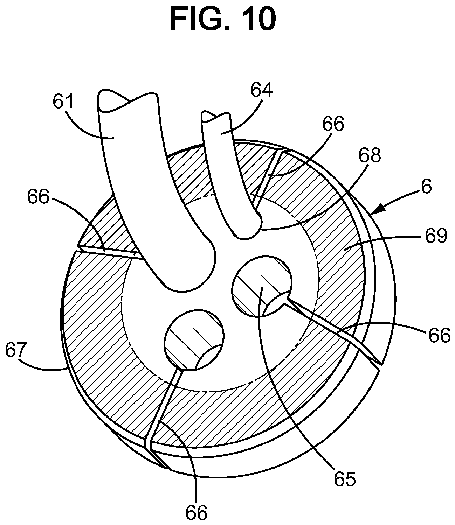

Lorsque l'on vient assembler le support-fusée **1** sur la jambe de force **8,** la compression s'exerce sur la zone **69** repérée en hachures fines à la figure 10, qui présente une surface relativement importante par rapport à la surface du joint et permet de bien fermer les fentes et bien comprimer les conducteurs dans les orifices **65,68.**

### Variantes

Dans une variante non représentée aux figures, la bouche de sortie **16b** se retrouve du côté extérieur du corps du stator 21, et la chambre de refroidissement se trouve agencée du côté intérieur du corps du stator ; en d'autres termes on a inversé, par rapport au cas précédent, les positions de l'équipement électrique (notamment connexions) et de la chambre de refroidissement par rapport au corps du stator. Dans ce cas et contrairement au cas précédent, le couvercle délimitant la chambre de refroidissement est agencé du côté intérieur du corps du stator, c'est-à-dire axialement disposé entre le corps du stator 21 et l'embase de fixation.

Dans cette variante, les débouchés côté extérieur des deux canalisations hydrauliques sont également orientées radialement et entrent directement dans les canaux internes la chambre de refroidissement obtenus de fonderie dans le couvercle ou dans le corps du stator ; dans ce cas les perçages **14,15** sont non-traversants, chaque fond de perçage débouchant dans un canal borgne dirigé radialement vers l'extérieur.

Concernant le passage **16** pour les câbles électriques **60,** comme le débouché radial est plus loin de l'embase de fixation, cela permet d'avoir une disposition de câbles **60** avec une courbure moins prononcée.

Selon une autre variante non représentée, les perçages **14,15** sont non-traversants et débouchent chacun dans un canal borgne, mais ces deux canaux borgnes sont à des positions axialement décalées. On forme en vis-à-vis dans le couvercle ou dans le corps du stator deux gorges radiales partielles ou totales, chacune se trouvant en vis-à-vis d'un canal borgne correspondant.

## Revendications

1. **Dispositif de traction-freinage** (50) pour une roue motorisée (100) de véhicule électrique comportant un **ensemble stator** (2), lequel dispositif de traction-freinage (50) comprenant :
- un **support-fusée** (1), le support-fusée comportant une embase de fixation (12) destiné à relier le dispositif de traction-freinage (50) au véhicule, le support-fusée étant destiné à supporter fixement l'ensemble stator et à supporter rotationnellement le rotor et la roue motorisée d'axe de rotation (A), le support-fusée comportant au moins trois passages axiaux, deux pour deux canalisations (14,15) de fluide et un pour passage de câbles (16), moyennant quoi l'ensemble stator peut être relié au reste du véhicule pour les fonctions de commande électrique et de refroidissement liquide,
- un **rotor** (3) agencé radialement à **l'extérieur** de l'ensemble stator,
- un **disque de frein** (45) solidaire en rotation du rotor, le disque de frein étant disposé plus proche de l'embase de fixation au véhicule que l'ensemble stator et le rotor, le disque de frein étant séparé du rotor par un espace (G) disponible pour loger au moins un étrier de frein, **caractérisé en ce que** les au moins trois passages débouchent dans une zone centrale (11) de l'embase de fixation, le support-fusée comporte une première portée (17) pour un premier roulement (71), une portée intermédiaire (18) pour recevoir un palier cylindrique interne (20), centré sur l'axe de rotation (A), d'un corps de stator (21), une seconde portée (19) pour un second roulement (72), les diamètres allant décroissants depuis l'embase de fixation jusqu'à l'extrémité libre (1b) à l'opposé de l'embase de fixation.

2. Dispositif de traction-freinage (50) selon la revendication précédente dans lequel les trois passages sont répartis au voisinage de l'axe de rotation (A) selon une disposition générale en triangle.

3. Dispositif de traction-freinage selon l'une des revendications 1-2, dans lequel le passage de câbles (16) débouche radialement (16b) dans un espace adjacent au corps du stator.

4. Dispositif de traction-freinage selon l'une des revendications 1-3, le passage de câbles (16) débouche axialement (13) à l'extrémité opposée (1b) de l'embase.

5. Dispositif de traction-freinage selon l'une des revendications 1-4, dans lequel les **deux** passages axiaux (14,15) pour deux canalisations sont formés par des perçages parallèles à l'axe principal **A** du support-fusée.

6. Dispositif de traction-freinage selon l'une des revendications 1-5, dans lequel l'ensemble stator (2) comprend un corps de stator (21), et un couvercle (22) délimitant une chambre de refroidissement (5).

7. Dispositif de traction-freinage selon la revendication 6, dans lequel le stator comprend un équipement annulaire de bobinages (24) agencé de manière à être à une position axiale moyenne (25M) plus éloignée de l'embase du support-fusée que la position axiale moyenne (20M) du palier (20) portant sur le support-fusée.

8. Dispositif de traction-freinage selon l'une des revendications 6-7, dans lequel le couvercle (22) délimitant la chambre de refroidissement est agencé du côté extérieur du corps (21) du stator, c'est-à-dire du côté de l'extrémité libre (1b) du support-fusée.

9. Dispositif de traction-freinage selon l'une des revendications 6-7, dans lequel le couvercle délimitant la chambre de refroidissement est agencé du côté intérieur du corps du stator, c'est-à-dire axialement disposé entre le corps du stator et l'embase de fixation.

10. Dispositif de traction-freinage (50) selon l'une des revendications 1-9, **caractérisé en ce qu'**il est circonscrit dans le volume intérieur d'une jante de roue de 14 pouces.

11. Dispositif de traction-freinage (50) selon l'une des revendications 1-10, dans lequel le rotor (3) est formé comme un assemblage d'une partie centrale cylindrique (30) portant les aimants permanents, un disque extérieur (31) sur lequel peut être fixée la jante de roue et un disque intérieur (39) à col (38) sur lequel est fixé le disque de frein.

12. Dispositif de traction-freinage (50) selon l'une des revendications 1-11, dans lequel l'espace intérieur délimité par le rotor est isolé de l'environnement extérieur par des joints d'étanchéité (6, 77, 78).

## Patentansprüche

1. Antriebs-Brems-Vorrichtung (50) für ein motorisiertes Rad (100) eines Elektrofahrzeugs, die eine Statoreinheit (2) aufweist, wobei die Antriebs-Brems-Vorrichtung (50) enthält:
- einen Achsschenkelträger (1), wobei der Achsschenkelträger eine Befestigungsbasis (12) aufweist, die dazu bestimmt ist, die Antriebs-Brems-Vorrichtung (50) mit dem Fahrzeug zu verbinden, wobei der Achsschenkelträger dazu bestimmt ist, die Statoreinheit ortsfest zu tragen und den Rotor und das motorisierte Rad einer Drehachse (A) drehbar zu tragen, wobei der Achsschenkelträger mindestens drei axiale Durchlässe aufweist, zwei für zwei Fluidleitungen (14, 15) und einen für einen Kabeldurchlass (16), wodurch die Statoreinheit für die Funktionen der elektrischen Steuerung und der Flüssigkeitskühlung mit dem Rest des Fahrzeugs verbunden werden kann,
- einen Rotor (3), der bezüglich der Statoreinheit radial außen angeordnet ist,
- eine drehfest mit dem Rotor verbundene Bremsscheibe (45), wobei die Bremsscheibe näher als die Statoreinheit und der Rotor an der Befestigungsbasis am Fahrzeug angeordnet ist, wobei die Bremsscheibe vom Rotor durch einen Raum (G) getrennt ist, der zur Verfügung steht, um mindestens einen Bremssattel unterzubringen,
**dadurch gekennzeichnet, dass** die mindestens drei Durchlässe in einen zentralen Bereich (11) der Befestigungsbasis münden, der Achsschenkelträger ein erstes Auflager (17) für ein erstes Wälzlager (71), ein Zwischenauflager (18) zur Aufnahme eines auf die Drehachse (A) zentrierten inneren zylindrischen Lagers (20) eines Statorkörpers (21), ein zweites Auflager (19) für ein zweites Wälzlager (72) aufweist, wobei die Durchmesser von der Befestigungsbasis bis zum freien Ende (1b) entgegengesetzt zur Befestigungsbasis abnehmen.

2. Antriebs-Brems-Vorrichtung (50) nach dem vorhergehenden Anspruch, wobei die drei Durchlässe in der Nähe der Drehachse (A) gemäß einer allgemeinen Dreiecksanordnung verteilt sind.

3. Antriebs-Brems-Vorrichtung nach einem der Ansprüche 1-2, wobei der Kabeldurchlass (16) radial (16b) in einen dem Körper des Stators benachbarten Raum mündet.

4. Antriebs-Brems-Vorrichtung nach einem der Ansprüche 1-3, wobei der Kabeldurchlass (16) axial (13) am entgegengesetzten Ende (1b) der Basis mündet.

5. Antriebs-Brems-Vorrichtung nach einem der Ansprüche 1-4, wobei die zwei axialen Durchlässe (14, 15) für zwei Leitungen von Bohrungen parallel zur Hauptachse A des Achsschenkelträgers geformt werden.

6. Antriebs-Brems-Vorrichtung nach einem der Ansprüche 1-5, wobei die Statoreinheit (2) einen Statorkörper (21) und einen Deckel (22) aufweist, der eine Kühlkammer (5) begrenzt.

7. Antriebs-Brems-Vorrichtung nach Anspruch 6, wobei der Stator eine ringförmige Ausrüstung von Wicklungen (24) enthält, die so angeordnet ist, dass sie in einer weiter von der Basis des Achsschenkelträgers entfernten mittleren axialen Stellung (25M) als die mittlere axiale Stellung (20M) des auf dem Achsschenkelträger aufliegenden Lagers (20) ist.

8. Antriebs-Brems-Vorrichtung nach einem der Ansprüche 6-7, wobei der die Kühlkammer begrenzende Deckel (22) an der Außenseite des Körpers (21) des Stators angeordnet ist, d.h. auf der Seite des freien Endes (1b) des Achsschenkelträgers.

9. Antriebs-Brems-Vorrichtung nach einem der Ansprüche 6-7, wobei der die Kühlkammer begrenzende Deckel auf der Innenseite des Körpers des Stators angeordnet ist, d.h. axial zwischen dem Körper des Stators und der Befestigungsbasis angeordnet ist.

10. Antriebs-Brems-Vorrichtung (50) nach einem der Ansprüche 1-9, **dadurch gekennzeichnet, dass** sie vom Innenvolumen einer 14-Zoll-Radfelge begrenzt wird.

11. Antriebs-Brems-Vorrichtung (50) nach einem der Ansprüche 1-10, wobei der Rotor (3) wie ein Zusammenbau eines zylindrischen zentralen Teils (30), der die Dauermagnete trägt, einer äußeren Scheibe (31), an der die Radfelge befestigt werden kann, und einer inneren Scheibe (39) mit Hals (38) geformt ist, an dem die Bremsscheibe befestigt ist.

12. Antriebs-Brems-Vorrichtung (50) nach einem der Ansprüche 1-11, wobei der vom Rotor begrenzte Innenraum durch Dichtungen (6, 77, 78) von der Außenumgebung isoliert ist.

## Claims

1. A traction-braking device (50) for a motorized wheel (100) of an electric vehicle having a stator assembly (2), the traction-braking device including:
- a stub-axle support (1), the stub-axle support having a securing base (12) for connecting the traction-braking device (50) to the vehicle, the stub-axle support being intended to fixedly support the stator assembly and to rotationally support the rotor and the motorized wheel having an axis of rotation (A), the stub-axle support comprising at least three axial passages, two for two fluid pipes (14, 15) and one for the passage of cables (16), whereby the stator assembly can be connected to the rest of the vehicle for the electric control and liquid cooling functions,
- a rotor (3) arranged radially on the outside of the stator assembly,
- a brake disk (45) rotating as one with the rotor, the brake disk being arranged closer to the securing base to the vehicle than the stator assembly and the rotor, the brake disk being separated from the rotor by a space (G) available to accommodate at least one brake caliper,
**characterised in that** the at least three passages are opening into a central zone (11) of the securing base, the stub axle support comprises a first seating (17) for a first bearing (71), an intermediate seating (18) to receive a stator body (21), a second seating (19) for a second bearing (72), with the diameters decreasing from the securing base to the free end (1b) at the opposite of the securing base.

2. The traction-braking device as claimed in the preceding claim in which the three axial passages are distributed in the vicinity of the axis of rotation (A) according to a generally triangular arrangement.

3. The traction-braking device as claimed in claims 1-2, in which the passage of cables (16) opens radially (16b) in a space adjacent to the body of the stator.

4. The traction-braking device as claimed in one of claims 1-3, the passage of cables (16) opens axially (13) at the opposite end (1b) of the base.

5. The traction-braking device as claimed in one of claims 1-4, wherein the two axial passages (14, 15) for two pipes are formed by holes parallel to the main axis A of the stub-axle support.

6. The traction-braking device as claimed in one of claims 1-5, in which the stator assembly (2) comprises a stator body (21) and a cover (22) defining a cooling chamber (5).

7. The traction-braking device as claimed in claim 6, in which the stator comprises an annular element of coils (24) arranged so as to be at an average axial position (25M) further from the base of the stub-axle support than the average axial position (20M) of the bearing (20) bearing on the stub-axle support.

8. The traction-braking device as claimed in one of claims 6-7, in which cover (22) defining the cooling chamber is arranged on the outside of the body (21) of the stator, i.e. on the side of the free end (1b) of stub-axle support.

9. The traction-braking device as claimed in one of claims 6-7, in which the cover defining the cooling chamber is arranged on the inside of the body of the stator, i.e. arranged axially between the body of the stator and the securing base.

10. The traction-braking device (50) as claimed in one of claims 1-9, **characterized in that** it is circumscribed within the internal volume of a 14-inch wheel rim.

11. The traction-braking device (50) as claimed in one of claims 1-10, in which the rotor (3) is formed as an assembly of a cylindrical central part (30) bearing permanent magnets, an outer disk (31) on which can be secured the wheel rim and an inner disk (39) with neck (38) on which the brake disk is secured.

12. The traction-braking device (50) as claimed in one of claims 1-11, in which the interior space defined by the rotor is isolated from the external environment by seals (6, 77, 78).
